# EUROPÄISCHE PATENTSCHRIFT

(11) **EP 0 535 687 B1**
(45) Veröffentlichungstag und Bekanntmachung des Hinweises auf die Patenterteilung: **15.06.1994**
(21) Anmeldenummer: 92116857.1
(22) Anmeldetag: 01.10.1992
(51) Int. Cl.: C08G 77/06, C08G 77/20, C08J 3/12

(54) **Verfahren zur Herstellung von Organopolysiloxanharz**
Preparation process of silicone resin
Procédé de préparation de résine organopolysiloxane

(30) Priorität: 01.10.1991 DE 4132697
(43) Veröffentlichungstag der Anmeldung: 07.04.1993
(73) Patentinhaber: WACKER-CHEMIE GMBH, D-81737 München (DE)
(72) Erfinder: Mautner, Konrad, Dr., W-8261 Kastl (DE); Weidner, Richard, Dr., W-8263 Burghausen (DE); Oswaldbauer, Helmut, W-8399 Stubenberg (DE)

(56) Entgegenhaltungen:
- EP-A- 0 217 333
- EP-A- 0 294 277
- DE-A- 3 717 073
- FR-A- 2 639 950
- US-A- 3 354 095
- DATABASE WPIL Section Ch, Week 9130, 25. September 1991 Derwent PublicationsLtd., London, GB; Class A26, AN 91-218498
- DATABASE WPIL Week 8202, Derwent Publications Ltd., London, GB; AN 82-03064E

## Beschreibung

Die Erfindung betrifft ein Verfahren zur Herstellung von Organopolysiloxanharz durch Hydrolyse und Kondensation von Silanen sowie dessen Verwendung.

Verfahren zur Herstellung von Organopolysiloxanharz sind bereits bekannt. Beispielsweise wird in US-A 4,605,446 (Kansai Paint Company, Ltd.; ausgegeben am 12. August 1986) ein Verfahren beschrieben, bei dem Tetraalkoxysilane und Trialkoxysilane zunächst in Anwesenheit von Säure hydrolysiert und anschließend in Anwesenheit von Base kondensiert werden. Die Isolierung der entstandenen Organopolysiloxane erfolgt durch Zugabe wasserunlöslicher Lösungsmittel und Phasentrennung. In US-A 4,528,390 (Toshiba Silicone Co., Ltd.; ausgegeben am 9. Juli 1985) wird ein Verfahren zur Herstellung von Organosilsesquioxanen durch Hydrolyse und Kondensation von Methyltrialkoxysilanen in einer wäßrigen Lösung von Ammoniak oder Amin offenbart, wobei das ausgefallene Harz isoliert wird. Des weiteren wird in DE-OS 3717073 (Wacker-Chemie GmbH; ausgegeben am 8. Dezember 1988) bzw. der entsprechenden US-A 4,935,484 (ausgegeben am 19. Juni 1990) ein Verfahren zur Herstellung von Siliconharzpulvern durch Sprühtrocknung von nach einem speziellen Verfahren hergestellten, wäßrigen kolloidalen Suspensionen von Organopolysiloxanen beschrieben.

In FR-A 2 639 950 wird ein Verfahren zur Herstellung von Silikonharz beschrieben, bei dem Organotrialkoxysilan und Diorganodialkoxysilan in Gegenwart von Säure hydrolysiert und anschließend basisch kondensiert werden, wobei das gebildete Harz ausfällt. Das in organischen Lösungsmitteln unlösliche Harz wird insbesondere als Füllstoff verwendet.

In US-A 3,354,095 wird die Herstellung von Silikonharz durch Hydrolyse und Kondensation in konzentrierter Lösung in Anwesenheit von Emulgator beschrieben, wobei sphärische, fest vergelte Partikel entstehen.

In EP 294 277 wird ein Verfahren zur Herstellung von MQ-Harz durch Hydrolyse ohne anschließendem Kondensationsschritt beschrieben.

In Derwent-Abstract AN 91-218498 wird ein Verfahren zur Herstellung von Organopolysiloxanharz durch Hydrolyse und Kondensation beschrieben, wobei eine aufwendige Neutralisation, Wasserabtrennung durch azeotrope Destillation und Reinigung sowohl nach der sauren wie auch nach der basischen Stufe durchgeführt wird. Die Produkte sind Harzlösungen, die erst ausdestilliert werden müssen, um Harze bzw. Harzpulver zu erhalten.

In Derwent-Abstract AN 82-030 64 E wird ein Verfahren zur Herstellung von Silsesquioxanen mit zur Polymerisation fähigen organischen Gruppen durch saure Hydrolyse und basischer Kondensation beschrieben.

Es bestand die Aufgabe, ein Verfahren bereitzustellen, welches es erlaubt, Organopolysiloxanharz auf einfache Art und Weise herzustellen. Eine weitere Aufgabe bestand darin, ein Verfahren bereitzustellen, mit dem Organopolysiloxanharzpulver auf technisch einfache Weise erhalten wird. Diese Aufgaben werden durch die Erfindung gelöst.

Gegenstand der Erfindung ist ein Verfahren zur Herstellung von Organopolysiloxanharz, dadurch gekennzeichnet, daß
in einer 1. Stufe
mindestens ein Silan der Formel

RₐSi(OR¹)₄₋ₐ (I),

wobei
- a: 0, 1, 2 oder 3 ist,
- R: gleich oder verschieden sein kann und einwertige, gegebenenfalls gegenüber Wasser inerte Substituenten aufweisende Kohlenwasserstoffreste mit 1 bis 18 Kohlenstoffatomen bedeutet und
- R¹: gleich oder verschieden sein kann und Alkylgruppen mit 1 bis 6 Kohlenstoffatomen, welche mit Alkoxy- oder Hydroxygruppen substituiert sein können, bedeutet,

und/oder dessen Teilhydrolysat, mit der Maßgabe, daß mindestens ein Silan der Formel (1) mit a gleich 0 oder 1 und/oder dessen Teilhydrolysat eingesetzt wird,
sowie gegebenenfalls Organo(poly)siloxan ausgewählt aus der Gruppe bestehend aus

R²₃Si-O-SiR²₃ (II),

wobei R² gleich oder verschieden sein kann und eine für R angegebene Bedeutung hat,

(R³₂SiO)_{b} (III),

wobei R³ gleich oder verschieden sein kann und eine für R angegebene Bedeutung hat und b eine ganze Zahl im Wert von 3 bis 8, vorzugsweise 4 oder 5, ist, sowie deren Gemische in Wasser in Gegenwart von Säure sowie gegebenenfalls Polymerisationsinhibitor umgesetzt wird und
in einer 2. Stufe
die in der 1. Stufe erhaltene Reaktionsmasse in Anwesenheit von Base sowie gegebenenfalls weiteren Stoffen, ausgewählt aus der Gruppe bestehend aus polaren, wasserlöslichen organischen Lösungsmitteln und Silanen der Formel (I), in denen die Reste R ganz oder zum Teil die Bedeutung von säureempfindlichen organischen Resten haben, umgesetzt wird, wobei zur Reaktionsmasse der 1. Stufe Base in mindestens einer solchen Menge gegeben wird, die zur Neutralisation notwendig ist, sowie
in einer 3. Stufe
die in der 2. Stufe erhaltene Reaktionsmasse in Wasser gegebenenfalls im Gemisch mit Zusatzstoffen eingerührt wird, wobei die Menge an Wasser mindestens 500 Gewichtsprozent, bezogen auf das Gesamtgewicht der Reaktionsmasse der 2.
Stufe, beträgt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3- Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxalkylreste, wie der 3-Acryloxypropyl- und 3- Methacryloxypropylrest; Hydroxyalkylreste, wie der Hydroxypropylrest und Reste der Formel 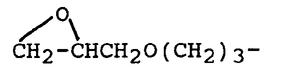
und HOCH₂CH(OH)CH₂SCH₂CH₂-.

Bei dem Rest R handelt es sich besonders bevorzugt um den Methyl-, n-Propyl-, Vinyl-, n-5-Hexenyl-, 3-Norbornenyl-, Phenyl- und Tolylrest.

Beispiele für Rest R¹ sind die für R angegebenen Beispiele.

Bei dem Rest R¹ handelt es sich besonders bevorzugt um den Methyl-, Ethyl-, n-Propyl-, iso-Propyl- und Hexylrest, insbesondere um den Methyl- und Ethylrest.

Beispiele für Rest R² sind die für R angegebenen Beispiele.

Bei dem Rest R² handelt es sich bevorzugt um Methyl-, Ethyl-, Vinyl-, n-5-Hexenyl-, 3-Norbornenyl- und Phenylreste, wobei Methyl-, Vinyl- und n-5-Hexenylreste besonders bevorzugt sind.

Beispiele für Rest R³ sind die für R angegebenen Beispiele.

Bei dem Rest R³ handelt es sich bevorzugt um den Methyl-, Vinyl- und Phenylrest, wobei der Methylrest besonders bevorzugt ist.

Falls bei dem erfindungsgemäßen Verfahren Teilhydrolysate von Silanen der allgemeinen Formel (I) eingesetzt werden, sind solche mit bis zu 15 Siliciumatomen bevorzugt.

Beispiele für die im erfindungsgemäßen Verfahren eingesetzten Silane der Formel (I) sind Tetramethoxysilan, Tetraethoxysilan, Tetra-n-propoxysilan, Methyltrimethoxysilan, Vinyltrimethoxysilan, 3-Mercaptopropyltrimethoxysilan, 3-Chlorpropyltrimethoxysilan, Phenyltrimethoxysilan, o,m,p-Tolyltrimethoxysilan, Propyltrimethoxysilan, Methyltriethoxysilan, Vinyltriethoxysilan, 3-Mercaptopropyltriethoxysilan, 3-Chlorpropyltriethoxysilan, Phenyltriethoxysilan, o,m,p-Tolyltriethoxysilan, Propyltrimethoxysilan, Dimethyldiethoxysilan, Dimethyldimethoxysilan und Trimethylethoxysilan, wobei Tetraethoxysilan, Methyltrimethoxysilan, Methyltriethoxysilan, Phenyltriethoxysilan, o,m,p-Tolyltriethoxysilan und Propyltriethoxysilan bevorzugt eingesetzt werden.

Beispiele für die im erfindungsgemäßen Verfahren gegebenenfalls eingesetzten Organo(poly)siloxane der Formel (II) sind Hexamethyldisiloxan, 1,3-Diphenyltetramethyldisiloxan, 1,3-Bis(n-5-hexenyl)tetramethyldisiloxan, 1,3-Divinyltetramethylsiloxan, wobei Hexamethyldisiloxan, 1,3-Divinyltetramethylsiloxan und 1,3-Bis(n-5-hexenyl)tetramethyldisiloxan bevorzugt und Hexamethyldisiloxan besonders bevorzugt ist.

Beispiele für die im erfindungsgemäßen Verfahren gegebenenfalls eingesetzten Organo(poly)siloxane der Formel (III) sind Hexamethylcyclotrisiloxan, Octamethylcyclotetrasiloxan, Dekamethylcyclopentasiloxan, wobei Octamethylcyclotetrasiloxan und Dekamethylcyclopentasiloxan bevorzugt sind.

Bei einer bevorzugten Ausführungsform des erfindungsgemäßen Verfahrens wird in der 1. Stufe ein Gemisch aus Organo(poly)siloxan der Formel (II), insbesondere solches mit R² gleich Methyl- oder Vinylrest, und Silan der Formel (I) mit a gleich 0 und/oder dessen Teilhydrolysat im Molverhältnis von bevorzugt 0,5:1 bis 1,0:1,0, besonders bevorzugt 0,6:1 bis 0,9:1, eingesetzt.

Bei einer weiteren bevorzugten Ausführungsform des erfindungsgemäßen Verfahrens werden in der 1. Stufe beliebige Gemische aus Silanen der Formel (I) und/oder deren Teilhydrolysate, mit der Maßgabe, daß mindestens ein Silan mit a gleich 0 oder 1 und/oder dessen Teilhydrolysat vorhanden ist, eingesetzt, in denen mindestens 20 Prozent, bevorzugt mindestens 50 Prozent, der gesamten Anzahl der Reste R aromatische Reste, wie der Phenyl- oder Tolylrest, sind. Bei den übrigen Resten R handelt es sich dabei vorzugsweise um den Methyl-, n-Propyl- oder Vinylrest. Der durchschnittliche Wert von a ist bei dieser bevorzugten Ausführungsform zwischen 0,3 und 2,1, besonders bevorzugt zwischen 0,5 und 1,5.

SiC-gebundene n-5-Hexenylgruppen aufweisende Organopolysiloxanharze aus [R⁴₃SiO_{1/2}]- und [SiO_{4/2}]-Einheiten, wobei R⁴ gleich oder verschieden sein kann und eine für R angegebene Bedeutung hat, mit der Maßgabe, daß mindestens ein Rest R⁴ die Bedeutung von n-5-Hexenylrest hat, können unter Verwendung von mindestens einem Organo(poly)siloxan der Formel (II), wobei mindestens ein Rest R² die Bedeutung von n-5-Hexenylrest hat, insbesondere 1,3-Bis-(n-5-hexenyl)tetramethyldisiloxan, und Silan der Formel (I) mit a gleich 0 und/oder dessen Teilhydrolysat im Molverhältnis von vorzugsweise 0,50 : 1 bis 0,80 : 1, besonders bevorzugt von 0,65 : 1 bis 0,75 : 1, nach dem erfindungsgemäßen Verfahren hergestellt werden.

Beispiele für Reste R⁴ sind die für R angegebenen Beispiele.

Beispiele für erfindungsgemäße SiC-gebundene n-5-Hexenylgruppen aufweisende Organopolysiloxanharze sind Harze des Typs
[HexSiMe₂O_{1/2}]_{c}[Me₃SiO_{1/2}]_{d}[SiO_{4/2}]ₑ mit
Hex gleich n-5-Hexenylrest, Me gleich Methylrest, einem Verhältnis von c:d von 0,05 bis 0,2 und (c+d):e von 0,5 bis 0,9.

Vorzugsweise handelt es sich bei den erfindungsgemäßen SiC-gebundene n-5-Hexenylgruppen aufweisenden Organopolysiloxanharzen um Harze des Typs
[HexSiMe₂O_{1/2}]_{c}[Me₃SiO_{1/2}]_{d}[SiO_{4/2}]ₑ mit Hex gleich n-5-Hexenylrest, Me gleich Methylrest, wobei solche mit einem Verhältnis von c:d von 0,08 bis 0,15 und (c+d):e von 0,7 bis 0,9 besonders bevorzugt sind.

Bei dem erfindungsgemäßen Verfahren werden in der 1. Stufe zu Silan der Formel (I) und/oder dessen Teilhydrolysat gegebenfalls im Gemisch mit Organo(poly)siloxan der Formel (II) und/oder (III) Wasser und Säure sowie gegebenenfalls weitere Stoffe gegeben und vermischt.

Bei der 1. Stufe des erfindungsgemäßen Verfahrens wird dabei Wasser in Mengen von vorzugsweise 10 bis 30 Gewichtsprozent, besonders bevorzugt 10 bis 20 Gewichtsprozent, insbesondere 14 bis 17 Gewichtsprozent, jeweils bezogen auf das Gesamtgewicht der Reaktionsmasse der 1. Stufe, eingesetzt.

Bei den in der 1. Stufe des erfindungsgemäßen Verfahrens eingesetzten Säuren kann es sich um die gleichen Säuren handeln, die auch bisher zur Hydrolyse von Silanen mit Organyloxygruppen verwendet wurden. Beispiele für derartige Säuren sind anorganische Säuren, wie HCl, HClO₄, H₂SO₄ und H₃PO₄, organische Säuren, wie Ameisensäure, Essigsäure, Propionsäure, p-Toluolsulfonsäure, Methansulfonsäure, Trifluormethansulfonsäure, Dodecylbenzolsulfonsäure, sowie saure Ionenaustauschharze, wobei HCl, Dodecylbenzolsulfonsäure und p-Toluolsulfonsäure bevorzugt eingesetzt werden.

In der 1. Stufe des erfindungsgemäßen Verfahrens wird Säure in Mengen von vorzugsweise mindestens 10 ppm (parts per million), besonders bevorzugt mindestens 100 ppm, jeweils bezogen auf das Gesamtgewicht der Reaktionsmasse der 1. Stufe, eingesetzt. Die Obergrenze der Säurekonzentration hängt zum einen von der Art der Säure und zum anderen von dem gewünschten Grad an Homogenität der Reaktionsmasse ab. Beispielsweise hat sich bei der Verwendung von HCl als Säure ein Konzentrationsbereich von 100 bis 3000 ppm, bezogen auf das Gesamtgewicht der Reaktionsmasse der 1. Stufe, als vorteilhaft herausgestellt. Bei höheren Säurekonzentrationen wird im allgemeinen keine Homogenität der Reaktionsmasse erzielt.

Vorzugsweise liegt der pH-Wert der Reaktionsmasse in der 1. Stufe des erfindungsgemäßen Verfahrens im Bereich von 0 bis 3, besonders bevorzugt im Bereich von 1 bis 2.

Zusätzlich können in der 1. Stufe des erfindungsgemäßen Verfahrens bis zu vorzugsweise 0,01 Gewichtsprozent, bezogen auf das Gesamtgewicht der Reaktionsmasse der 1. Stufe, weitere Stoffe eingesetzt werden, wie zum Beispiel Polymerisationsinhibitoren, die die Homopolymerisation von olefinischen Einsatzstoffen, wie beispielsweise 1,3-Bis-(n-5-hexenyl)tetramethyldisiloxan, verhindern sollen.

Beispiele für gegebenenfalls eingesetzte Polymerisationsinhibitoren sind Hydrochinon, Brenzkatechin und BTH (2,6-Di-t-butyl-4-methylphenol).

Die bei der Hydrolyse in der 1. Stufe des erfindungsgemäßen Verfahrens entstehende Verbindung R¹OH mit R¹ gleich der obengenannten Bedeutung kann während oder nach der Hydrolyse ganz oder teilweise entfernt werden.

Vorteilhafterweise wird die Verbindung R¹OH, insbesondere bei R¹ gleich Alkylrest mit 1 bis 6 Kohlenstoffatom(en), während der Hydrolyse destillativ entfernt. Besonders bevorzugt wird die destillative Entfernung erst etwa 30 Minuten bis 1 Stunde nach Beginn der Hydrolyse gestartet, so daß das Abdestillieren eingesetzter Silane weitgehend vermieden wird.

Vorzugsweise wird Verbindung R¹OH mit R¹ gleich der obengenannten Bedeutung in dem Maße abdestilliert, daß die Reaktionsmasse homogen bleibt. Vorzugsweise wird bis zu 95 Gewichtsprozent Verbindung R¹OH, bezogen auf das Gesamtgewicht an entstandener Verbindung R¹OH mit R¹ gleich der obengenannten Bedeutung, destillativ entfernt.

Die 1. Stufe des erfindungsgemäßen Verfahrens wird vorzugsweise bei einer Temperatur von 20°C bis zur Siedetemperatur der Reaktionsmasse, besonders bevorzugt bei der Siedetemperatur der Reaktionsmasse, und einem Druck zwischen bevorzugt 900 und 1100 hPa durchgeführt.

Die 1. Stufe des erfindungsgemäßen Verfahrens ist nach vorzugsweise 30 Minuten bis 5 Stunden, besonders bevorzugt 2 bis 3 Stunden, abgeschlossen.

Nach Beendigung der 1. Stufe des erfindungsgemäßen Verfahrens wird Base in mindestens einer solchen Menge, die zur Neutralisation der Reaktionsmasse notwendig ist, sowie gegebenenfalls weitere Stoffe zugegeben. Es handelt sich dabei im allgemeinen um Basenmengen im Bereich von 0,1 bis 2,0 Gewichtsprozent, bezogen auf das Gesamtgewicht der Reaktionsmasse der 2. Stufe.

Vorzugsweise wird in der 2. Stufe soviel Base zugegeben, daß der pH-Wert im Bereich von 8,0 bis 14,0, bevorzugt von 9,0 bis 12,0, liegt.

Als Basen können in der 2. Stufe des erfindungsgemäßen Verfahrens alle Basen eingesetzt werden, die auch bisher als Katalysatoren bei Kondensationsreaktionen eingesetzt wurden.

Beispiele für solche Basen sind Alkalihydroxide, wie Natriumhydroxid und Kaliumhydroxid, Alkalisiliconate, wie Natriumsiliconat und Kaliumsiliconat, Amine, wie beispielsweise Methylamin, Dimethylamin, Ethylamin, Diethylamin, Triethylamin und n-Butylamin, Ammoniumverbindungen, wie etwa Tetramethylammoniumhydroxid, Tetra-n-butylammoniumhydroxid und Benzyltrimethylammoniumhydroxid, und basische Ionenaustauscher, wobei Natriumhydroxid, Methylamin, Ethylamin, Diethylamin und Benzyltrimethylammoniumhydroxid bevorzugt und die leicht flüchtigen Basen Methylamin, Ethylamin und Diethylamin besonders bevorzugt sind.

Falls erwünscht, kann die Base im Gemisch mit Wasser und/oder einem polaren, wasserlöslichen organischen Lösungsmittel zugegeben werden. Die Verdünnung der Base darf jedoch nicht so hoch sein, daß die Basenzugabe zu einer Ausfällung des entstandenen Organopolysiloxanharzes führt.

Falls erwünscht, kann in der 2. Stufe des erfindungsgemäßen Verfahrens polares, wasserlösliches organisches Lösungsmittel eingesetzt werden, was je nach Einsatzmenge und Art des Lösungsmittels zum Erreichen einer homogenen Reaktionsmasse beitragen kann.

Unter dem Begriff polare, wasserlösliche organische Lösungsmittel sollen im Folgenden bei Raumtemperatur und dem Druck der umgebenden Atmosphäre mit Wasser bevorzugt vollständig mischbare Lösungsmittel verstanden werden. Die Mindestlöslichkeit des organischen Lösungsmittels muß jedoch bei Raumtemperatur und dem Druck der umgebenden Atmosphäre über 300 g/l Wasser liegen.

Beispiele für polare, wasserlösliche organische Lösungsmittel sind Methanol, Ethanol, Aceton, Dioxan, Dimethylformamid, Tetrahydrofuran, Dimethylsulfoxid sowie deren Gemische, wobei Tetrahydrofuran und Dioxan bevorzugt und Tetrahydrofuran besonders bevorzugt ist.

Falls polares, wasserlösliches organisches Lösungsmittel verwendet wird, wird es vorzugsweise in solchen Mengen eingesetzt, die zum Erreichen einer weitgehend homogenen Reaktionsmasse führen. Es handelt sich dabei bevorzugt um Mengen von bis zu 30 Gewichtsprozent, besonders bevorzugt bis zu 20 Gewichtsprozent polares, wasserlösliches organisches Lösungsmittel, jeweils bezogen auf das Gesamtgewicht der Reaktionsmasse der 2. Stufe.

Beispiele für die in der 2. Stufe gegebenenfalls eingesetzten weiteren Stoffe sind Silane der Formel (I), in denen die Reste R ganz oder zum Teil die Bedeutung von säureempfindlichen organischen Resten haben, wie beispielsweise 3-Aminopropyl-,N-(2-Aminoethyl)-3-aminopropyl- sowie Aminophenylreste.

Die 2. Stufe des erfindungsgemäßen Verfahrens wird vorzugsweise bei einer Temperatur zwischen 50°C und der Siedetemperatur der Reaktionsmasse, besonders bevorzugt bei der Siedetemperatur der Reaktionsmasse und einem Druck von bevorzugt zwischen 900 und 1100 hPa durchgeführt.

Die 2. Stufe des erfindungsgemäßen Verfahrens ist nach vorzugsweise 1 bis 5 Stunden, besonders bevorzugt 2 bis 4 Stunden, abgeschlossen.

Nach Beendigung der 2. Stufe wird die Reaktionsmasse in Wasser gegebenenfalls im Gemisch mit Zusatzstoffen eingerührt, wobei das Organopolysiloxanharz als hydrophobe Partikel ausfällt.

Die in der 3. Stufe des erfindungsgemäßen Verfahrens verwendete Menge an Wasser beträgt vorzugsweise 500 bis 1000 Gewichtsprozent, besonders bevorzugt 600 bis 700 Gewichtsprozent, jeweils bezogen auf das Gesamtgewicht der Reaktionsmasse der 2. Stufe.

Um basenfreies Organopolysiloxanharz zu erhalten, kann die in der 2. Stufe erhaltene Reaktionsmasse nach Beendigung der 2. Stufe vor der Fällung in Wasser mit Säure neutralisiert werden oder die Fällung in säurehaltigem Wasser durchgeführt werden. Als Säuren sind dabei alle in der 1. Stufe genannten Säuren geeignet. Falls neutralisiert werden soll, was insbesondere bei der Herstellung phenylgruppenhaltiger Organopolysiloxanharze der Fall ist, wird die Neutralisation der in der 2. Stufe des erfindungsgemäßen Verfahrens erhaltenen Reaktionsmasse vor der Fällung bevorzugt.

Dem in der 3. Stufe des erfindungsgemäßen Verfahrens eingesetzten Wasser können neben Säure auch andere Zusatzstoffe, wie beispielsweise Flockungshilfsmittel zugesetzt werden.

Beispiele für Flockungshilfsmittel sind Polyvinylacetat, Polyvinylalkohol, Polyacrylat und Polyamin.

Falls in der 3. Stufe des erfindungsgemäßen Verfahrens Flockungshilfsmittel eingesetzt werden, werden diese in Mengen von vorzugsweise 0,01 bis 0,05 Gewichtsprozent, bezogen auf die in der 3. Stufe eingesetzte Menge an Wasser, verwendet.

Vorzugsweise wird in der 3. Stufe des erfindungsgemäßen Verfahrens jedoch neutrales Wasser ohne Zusatzstoffe eingesetzt, so daß Rückstände im erfindungsgemäß hergestellten Organopolysiloxanharz weitgehend vermieden werden können.

Die 3. Stufe des erfindungsgemäßen Verfahrens wird vorzugsweise bei Temperaturen von 0 bis 50°C, besonders bevorzugt 10 bis 25°C, und einem Druck von 900 bis 1100 hPa durchgeführt. Es können jedoch auch höhere oder niedrigere Drücke angewendet werden. Wird die Fällung bei vermindertem Druck bzw. im Vakuum durchgeführt, können leichtflüchtige Bestandteile noch während der Fällung zumindest zum Teil entfernt werden.

Die 3. Stufe des erfindungsgemäßen Verfahrens kann absatzweise in einem Rührwerk durchgeführt werden. Eine einfache abfallreduzierende, kontinuierliche Durchführung der Fällung ist aber ebenso möglich. Dazu werden beispielsweise in einer Loop Reaktionsmasse der 2. Stufe und Fällungswasser zudosiert und das ausgefallene Harz mit Hilfe einer Filtrationseinrichtung abgetrennt. Das Wasser wird, falls es polares, wasserlösliches organisches Lösungsmittel enthält, von diesem befreit und wieder zur Fällung eingesetzt. Das organische Lösungsmittel kann in der 2. Stufe des erfindungsgemäßen Verfahrens wiederverwendet werden.

Nach einer besonders bevorzugten Ausführungsform des erfindungsgemäßen Verfahrens wird Silan der Formel (I) mit a gleich 0, insbesondere Tetraethoxysilan, und/oder dessen Teilhydrolysat und Organo(poly)siloxan der Formel (II) in einer 1. Stufe mit Wasser und Säure vermischt, bei der Siedetemperatur der Reaktionsmasse, im Fall von Tetraethoxysilan und/oder dessen Teilhydrolysat 78°C, und einem Druck zwischen 900 und 1100 hPa umgesetzt,
in einer 2. Stufe die in der 1. Stufe erhaltene Reaktionsmasse in Anwesenheit von Base und einem polaren, organischen Lösungsmittel mit einer Mindestlöslichkeit in Wasser von 300 g/l Waser bei Raumtemperatur und einem Druck der umgebenden Atmosphäre, insbesondere Tetrahydrofuran, bei der Siedetemperatur der Reaktionsmasse, im Fall von Tetrahydrofuran 65°C, und einem Druck zwischen 900 und 1100 hPa umgesetzt und in einer
3. Stufe die in der 2. Stufe erhaltene Reaktionsmasse bei Raumtemperatur und einem Druck zwischen 900 und 1100 hPa in Wasser eingerührt.

Das erfindungsgemäße Verfahren kann diskontinuierlich, halbkontinuierlich und kontinuierlich durchgeführt werden. Eine kontinuierliche Herstellung von Organopolysiloxanharz ist beispielsweise möglich, wenn die in der ersten Stufe erhaltene Reaktionsmasse und Base zudosiert werden, wobei die entstehende Verbindung R¹OH mit R¹ gleich der obengenannten Bedeutung kontinuierlich abdestilliert wird, und nach Beendigung der Umsetzung die Reaktionsmasse in Wasser eingerührt wird.

Das erfindungsgemäße Verfahren hat den Vorteil, daß es sehr einfach in der Durchführung ist, hohe Raum-Zeit-Ausbeuten liefert und keine wasserunlöslichen Lösungsmittel zur Abtrennung des Organopolysiloxanharzes benötigt werden. Nach dem erfindungsgemäßen Verfahren werden Harze mit einer großen Reinheit erhalten, die als feine Pulver mit einer hohen Lösungskinetik anfallen. Das erfindungsgemäße Verfahren hat des weiteren den Vorteil, daß die thermische Belastung des Harzes sehr gering ist.

Das erfindungsgemäße Organopolysiloxanharz hat ein durchschnittliches Molekulargewicht von vorzugsweise 3000 bis 10000 und weist durchschnittlich weniger als, bezogen auf Silicium, 3 Molprozent Reste -OR¹ mit R¹ gleich der obengenannten Bedeutung auf. Das erfindungsgemäße Organopolysiloxanharz ist zumindest zum Teil, vorzugsweise jedoch ganz, in flüssigem Organopolysiloxan löslich.

Beispiele für die erfindungsgemäßen Organopolysiloxanharze sind [Me₃SiO_{1/2}]ₓ[SiO_{4/2}]_{y} mit Me gleich Methylrest und einem Verhältnis von x:y von 0,6 : 1 bis 0,9 : 1 und [Me₃SiO_{1/2}]ₓ[Me₂ViSiO_{1/2}]_{y}[SiO_{4/2}]_{z} mit Me gleich Methylrest, Vi gleich Vinylrest und einem Verhältnis von (x+y):z von 0,6 : 1 bis 0,9 : 1 und einem Verhältnis von x:y von 98:2 bis 80:20.

Ein weiterer Gegenstand der vorliegenden Erfindung ist ein Verfahren zur Herstellung von Organopolysiloxanharzpulver, dadurch gekennzeichnet, daß
in einer 1. Stufe
mindestens ein Silan der Formel

RₐSi(OR¹)₄₋ₐ (I),

wobei a, R und R¹ die oben dafür angegebene Bedeutung haben, und/oder dessen Teilhydrolysat, mit der Maßgabe, daß mindestens ein Silan der Formel (I) mit a gleich 0 oder 1 und/oder dessen Teilhydrolysat eingesetzt wird,
sowie gegebenenfalls Organo(poly)siloxan ausgewählt aus der Gruppe bestehend aus

R²₃Si-O-SiR²₃ (II),

wobei R² die oben dafür angegebene Bedeutung hat, und

(R³₂SiO)_{b} (III),

wobei R³ und b die oben dafür angegebene Bedeutung haben, sowie deren Gemische
in Wasser in Gegenwart von Säure und gegebenenfalls weiteren Stoffen umgesetzt wird,
in einer 2. Stufe
die in der 1. Stufe erhaltene Reaktionsmasse in Anwesenheit von Base sowie gegebenenfalls weiteren Stoffen, ausgewählt aus der Gruppe bestehend aus polaren, wasserlöslichen organischen Lösungsmitteln und Silanen der Formel (I), in denen die Reste R ganz oder zum Teil die Bedeutung von säureempfindlichen organischen Resten haben, umgesetzt wird, wobei zur Reaktionsmasse der 1. Stufe Base in mindestens einer solchen Menge gegeben wird, die zur Neutralisation notwenig ist,
in einer 3. Stufe
die in der 2. Stufe erhaltene Reaktionsmasse in Wasser gegebenenfalls im Gemisch mit Zusatzstoffen eingerührt wird, wobei die Menge an Wasser mindestens 500 Gewichtsprozent, bezogen auf das Gesamtgewicht der Reduktionsmasse der 2.
Stufe, beträgt, sowie
in einer 4. Stufe
das in der 3. Stufe erhaltene, ausgefallene Organopolysiloxanharz abfiltriert, gegebenenfalls mit Wasser gewaschen und getrocknet wird.

Die Trocknung des erfindungsgemäßen Organopolysiloxanharzes kann in üblichen Trocknern, wie zum Beispiel einem Wirbelschichttrockner, bei Temperaturen vorzugsweise bis 200°C, besonders bevorzugt bis 160°C, und einem Druck zwischen 900 und 1100 hPa durchgeführt werden. Die Trocknung kann jedoch auch bei höheren oder niedrigeren Drücken durchgeführt werden. Die Trocknung thermolabiler Organopolysiloxanharze wird vorzugsweise bei vermindertem Druck, insbesondere im Vakuum, und entsprechend niedrigeren Temperaturen durchgeführt.

Die Teilchengröße des erfindungsgemäßen Organopolysiloxanharzpulvers ist von mehreren Faktoren abhängig, wie beispielsweise von der Dosiergeschwindigkeit der Reaktionsmasse der 2. Stufe zum Fällungswasser, von den Rühr- und Strömungsverhältnissen bei der Fällung in der 3. Verfahrensstufe und der Zeitdauer der Bewegung im Fällbad, von gegebenenfalls eingesetzten Zusatzstoffen sowie von der Trocknung in der 4. Stufe des erfindungsgemäßen Verfahrens.

Das erfindungsgemäße Verfahren zur Herstellung von Organopolysiloxanpulver hat den Vorteil, daß es technisch sehr einfach durchführbar und reproduzierbar ist und auf die Anwendung aufwendiger Mahlprozesse verzichtet werden kann. Mit dem erfindungsgemäßen Verfahren ist es aufgrund der milden Reaktionsbedingungen möglich, thermolabile Organopolysiloxanharzpulver herzustellen.

Die so erhaltenen, erfindungsgemäßen Organopolysiloxanharzpulver haben eine durchschnittliche Partikelgröße von vorzugsweise 1 bis 200 »m. Die erfindungsgemäßen Organopolysiloxanharzpulver sind zumindest zum Teil, vorzugsweise jedoch ganz, in flüssigen Organopolysiloxanen und gängigen organischen Lösungsmitteln löslich. In organischen Lösungsmitteln, wie Toluol, Aceton, Hexan und Tetrahydrofuran, sind die erfindungsgemäßen Organopolysiloxanharzpulver ausgezeichnet löslich, während sie in niedrigen Alkoholen, wie Methanol und Ethanol, nur zum Teil löslich sind.

Die erfindungsgemäßen Organopolysiloxanharzpulver haben den Vorteil, daß sie frei von organischem Lösungsmittel anfallen, eine gute Lösungskinetik besitzen und darüberhinaus eine gute Lagerstabilität aufweisen.

Die erfindungsgemäßen Organopolysiloxanharze eignen sich für alle Anwendungen, für die auch bisher Organopolysiloxanharze eingesetzt werden konnten. So können die erfindungsgemäßen Organopolysiloxanharzpulver beispielsweise als Zusatz zu Antischaummitteln, Tonern, Lack- und anderen Beschichtungssystemen, wie etwa Papierbeschichtungsmassen, verwendet werden. Sie können aber auch anstelle hydrophobierter hochdisperser Kieselsäure als Füllstoffe in Kunststoffen, insbesondere Siliconkautschuk, verwendet werden. Insbesondere die erfindungsgemäßen Organopolysiloxanharzpulver mit SiC-gebundenen aromatischen Resten, wie phenyl- und/oder tolylgruppenhaltige Organopolysiloxanharzpulver, eignen sich hervorragend zur Herstellung witterungsstabiler Lacke.

Die erfindungsgemäßen, mindestens eine SiC-gebundene n-5-Hexenylgruppe aufweisenden Organopolysiloxanharzpulver können in bei niedrigen Temperaturen vulkanisierenden Beschichtungssystemen, den sog. LTC-Systemen (Low Temperatur Curing), insbesondere für schnell vernetzende Systeme bei der Papierbeschichtung, verwendet werden.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

Zu 900 g Tetraethoxysilan mit einem 40 %igen SiO₂-Anteil (käuflich erhältlich unter der Bezeichnung TES 40 bei der Wacker-Chemie GmbH, München) und 400 g Hexamethyldisiloxan werden 200 g Wasser und 4 g 10 %ige HCl in Wasser gegeben, für eine Dauer von 2 Stunden bei einer Temperatur von 78°C unter Rückfluß erhitzt und anschließend während einer Dauer von einer Stunde 470 g Ethanol abdestilliert. Zu dem homogenen Gemisch werden danach 300 ml Tetrahydrofuran und 2,5 g einer 40 %igen Lösung von Methylamin in Wasser (käuflich erhältlich bei der Fa. Merck, Darmstadt) gegeben und das ganze für eine Dauer von 3 Stunden bei 65°C unter Rückfluß erhitzt. Anschließend wird die so erhaltene homogene Reaktionsmasse unter kräftigem Rühren in 5 l Wasser gegeben, der entstandene Niederschlag abfiltriert und bei 120°C getrocknet. Es werden 720 g eines weißen, nicht schmelzbaren Organopolysiloxanharzpulvers mit einem Restethoxygehalt von 2,3 %, einem mittleren Teilchendurchmesser von 20,0 »m, einem Resthydroxygehalt von 0,9 % und einer Schüttdichte von 0,35 kg/l erhalten.

Das so erhaltene Organopolysiloxanharzpulver ist in gängigen organischen Lösungsmitteln, wie Toluol, Aceton, Hexan und Tetrahydrofuran, sowie in flüssigen Organopolysiloxanen, wie zum Beispiel α,ω-Trimethylsilylpolydimethylsiloxan mit einer Viskosität von 350 cSt, bis zu 60 % löslich.

Die Viskosität einer 50 %igen Lösung des erhaltenen Organopolysiloxanharzpulvers in Toluol beträgt 5 cSt.

### Beispiel 2

Die in Beispiel 1 angegebene Arbeitsweise wird wiederholt mit der Abänderung, daß anstelle von 400 g Hexamethyldisiloxan 385 g Hexamethyldisiloxan und 60 g 1,3-Divinyltetramethyldisiloxan eingesetzt wird. Die Reaktionsmasse ist in der sauren Stufe wie auch in der basischen Stufe homogen. Es werden 740 g eines weißen, nicht schmelzbaren Organopolysiloxanharzpulvers mit einem Restethoxygehalt von 2,5 %, einem mittleren Teilchendurchmesser von 20,0 »m, einem Resthydroxygehalt von 0,7 % und einer Schüttdichte von 0,35 kg/l erhalten.

Das so erhaltene Organopolysiloxanharzpulver ist in gängigen organischen Lösungsmitteln, wie Toluol, Aceton, Hexan und Tetrahydrofuran, sowie in flüssigen Organopolysiloxanen, wie zum Beispiel α,ω-Trimethylsilylpolydimethylsiloxan mit einer Viskosität von 350 cSt, bis zu 60 % löslich.

Die Viskosität einer 50 %igen Lösung des erhaltenen Organopolysiloxanharzpulvers in Toluol beträgt 3,2 cSt.

### Beispiel 3

Zu 900 g Tetraethoxysilan mit einem 40 %igen SiO₂-Anteil (käuflich erhältlich unter der Bezeichnung TES 40 bei der Wacker-Chemie GmbH, München), 400 g Hexamethyldisiloxan und 50 g 1,3-Bis-(n-5-hexenyl)tetramethyldisiloxan werden 200 g Wasser und 8 g 10 %ige HCl in Wasser gegeben und wie in Beispiel 1 beschrieben verfahren. Die Reaktionsmasse ist in der sauren Stufe wie auch in der basischen Stufe homogen. Es werden 735 g eines weißen, nicht schmelzbaren Organopolysiloxanharzpulvers mit einem Restethoxygehalt von 2,5 % und einem mittleren Teilchendurchmesser von 18,0 »m erhalten.

Das so erhaltene Organopolysiloxanharzpulver ist in gängigen organischen Lösungsmitteln, wie Toluol, Aceton, Hexan und Tetrahydrofuran, sowie in flüssigen Organopolysiloxanen, wie zum Beispiel α,ω-Trimethylsilylpolydimethylsiloxan mit einer Viskosität von 350 cSt, bis zu 60 % löslich.

Die Viskosität einer 80 %igen Lösung des erhaltenen Organopolysiloxanharzpulvers in Cyclohexan beträgt 84 cSt.

### Beispiel 4

Zu 900 g Tetraethoxysilan mit einem 40 %igen SiO₂-Anteil (käuflich erhältlich unter der Bezeichnung TES 40 bei der Wacker-Chemie GmbH, München), 385 g Hexamethyldisiloxan und 20 g 1,3-Bis-3-norbornenyltetramethyldisiloxan mit einem endo:exo-Verhältnis gleich 1:1 werden 200 g Wasser und 3 g Dodecylbenzolsulfonsäure gegeben und wie in Beispiel 1 beschrieben verfahren. Die Reaktionsmasse ist in der sauren Stufe wie auch in der basischen Stufe homogen. Es werden 670 g eines weißen, nicht schmelzbaren Organopolysiloxanharzpulvers mit einem Restethoxygehalt von 2,5 % und einem mittleren Teilchendurchmesser von 20,0 »m erhalten.

Das so erhaltene Organopolysiloxanharzpulver ist in gängigen organischen Lösungsmitteln, wie Toluol, Aceton, Hexan und Tetrahydrofuran, sowie in flüssigen Organopolysiloxanen, wie zum Beispiel α,ω-Trimethylsilylpolydimethylsiloxan mit einer Viskosität von 350 cSt, bis zu 60 % löslich.

Die Viskosität einer 50 %igen Lösung des erhaltenen Organopolysiloxanharzpulvers in Toluol beträgt 3,5 cSt.

### Vergleichsversuch 1

Die in den Beispielen 1 bis 4 beschriebene Arbeitsweise wird wiederholt mit der Abänderung, daß jeweils nach der Abdestillation des bei der sauren Hydrolyse entstandenen Ethanols die Reaktionsmasse ohne Zugabe von Methylamin und Tetrahydrofuran in 5 l Wasser eingerührt wird, wobei eine zähe, klebrige Masse ausfällt. Die so erhaltene Masse wird abgetrennt und bei Raumtemperatur getrocknet, wobei ein in allen gängigen organischen Lösungsmitteln und in flüssigen Organopolysiloxanen unlösliches Organopolysiloxanharz erhalten wird.

### Beispiel 5

Zu 240 ml Phenyltriethoxysilan und 116 ml n-Propyltriethoxysilan werden 160 ml Wasser und 3,6 ml 10 %ige HCl in Wasser gegeben, für eine Dauer von 2 Stunden bei einer Temperatur von 78°C unter Rückfluß erhitzt und anschließend während einer Dauer von einer Stunde 240 ml Ethanol abdestilliert. Danach werden 150 ml Tetrahydrofuran und 8,0 g Diethylamin (käuflich erhältlich bei der Fa. Merck, Darmstadt) zugegeben und das ganze für eine Dauer von 4 Stunden bei 65°C unter Rückfluß erhitzt. Nach dem Neutralisieren mit Essigsäure wird die Reaktionsmasse unter kräftigem Rühren in 3 l Wasser gegeben, der entstandene Niederschlag abfiltriert und bei 80°C und 15 hPa getrocknet. Die Reaktionsmasse ist in der sauren Stufe wie auch in der basischen Stufe homogen. Es werden 160 g eines weißen Organopolysiloxanharzpulvers mit einem Restethoxygehalt von 1,3 %, einem mittleren Teilchendurchmesser von 17,0 »m und einem Schmelzbereich von 90 bis 120 °C erhalten.

Das so erhaltene Organopolysiloxanharzpulver ist in gängigen organischen Lösungsmitteln, wie Toluol, Aceton, Hexan und Tetrahydrofuran bis zu 60 % löslich.

Die Viskosität einer 50 %igen Lösung des erhaltenen Organopolysiloxanharzpulvers in Toluol beträgt 22 cSt.

### Vergleichsversuch 2

Die in Beispiel 5 beschriebene Verfahrensweise wird wiederholt mit der Abänderung, daß nach der Abdestillation des bei der sauren Hydrolyse entstandenen Ethanols die Reaktionsmasse ohne Zugabe von Diethylamin und Tetrahydrofuran in 3 l Wasser eingerührt wird, wobei eine zähe, klebrige Masse ausfällt, die nach Abtrennung und Trocknung bei Raumtemperatur zu einem in allen gängigen, organischen Lösungsmitteln unlöslichen Organopolysiloxanharz erstarrt.

### Beispiel 6

Zu 400 g Phenyltrimethoxysilan, 40 g Tolyltrimethoxysilan, 30 g Dimethyldimethoxysilan und 30 g Hexamethyldisiloxan werden 85 ml Wasser und 2,0 g 10 %ige HCl in Wasser gegeben, für eine Dauer von 3 Stunden bei einer Temperatur von 65°C unter Rückfluß erhitzt und anschließend während einer Dauer von einer Stunde 450 g Methanol abdestilliert. Danach werden 100 g Tetrahydrofuran und 10,0 g einer 70 %igen Lösung von Ethylamin in Wasser (käuflich erhältlich bei der Fa. Merck, Darmstadt) zugegeben und das ganze für eine Dauer von 4 Stunden bei 65°C unter Rückfluß erhitzt. Anschließend wird die so erhaltene Reaktionsmasse unter kräftigem Rühren in 3 l Wasser, welches 0,1 % Flocculationshilfsmittel auf Polyvinylacetatbasis (käuflich erhältlich unter der Bezeichnung PVA 40/140 bei der Wacker-Chemie GmbH, München) enthält, gegeben, der entstandene Niederschlag abfiltriert und bei 80°C und 15 hPa getrocknet. Die Reaktionsmasse ist in der sauren Stufe wie auch in der basischen Stufe homogen. Es werden 200 g eines weißen Organopolysiloxanharzpulvers mit einem Restmethoxygehalt von 1,8 %, einem mittleren Teilchendurchmesser von 20,0 »m und einem Schmelzbereich von 100 bis 120 °C erhalten.

Das so erhaltene Organopolysiloxanharzpulver ist in gängigen organischen Lösungsmitteln, wie Toluol, Aceton, Hexan und Tetrahydrofuran bis zu 60 % löslich.

### Beispiel 7

Zu 428 g Phenyltriethoxysilan werden 86 g einer Lösung aus 10 mmol Dodecylbenzolsulfonsäure in 1 l Wasser gegeben, für eine Dauer von 3 Stunden bei einer Temperatur von 78°C unter Rückfluß erhitzt, wobei 100 g Ethanol als Destillat entnommen werden. Anschließend werden 0,6 g Diethylamin (käuflich erhältlich bei der Fa. Merck, Darmstadt) zugegeben, das ganze für eine Dauer von 1 Stunde bei 78°C unter Rückfluß erhitzt und danach mit Essigsäure vorsichtig neutralisiert. Die so erhaltene Reaktionsmasse wird unter kräftigem Rühren in 3 l Wasser gegeben, der entstandene Niederschlag abfiltriert und bei 80°C und 15 hPa getrocknet. Die Reaktionsmasse ist in der sauren Stufe wie auch in der basischen Stufe homogen. Es werden 205 g eines weißen Organopolysiloxanharzpulvers mit einem Restethoxygehalt von 2,0 % erhalten.

Das so erhaltene Organopolysiloxanharzpulver ist in gängigen organischen Lösungsmitteln, wie Toluol, Aceton, Hexan und Tetrahydrofuran bis zu 60 % löslich.

### Beispiel 8

Zu 800 g Tetraethoxysilan mit einem 40 %igen SiO₂-Anteil (käuflich erhältlich unter der Bezeichnung TES 40 bei der Wacker-Chemie GmbH, München), 50 g Methyltriethoxysilan, 50 g Phenyltriethoxysilan und 360 g Hexamethyldisiloxan werden 200 g Wasser und 4 g 10 %ige HCl in Wasser gegeben, für eine Dauer von 2 Stunden bei einer Temperatur von 78°C unter Rückfluß erhitzt und anschließend während einer Dauer von einer Stunde 450 g Ethanol abdestilliert. Danach werden 200 g Dioxan und 4,0 g einer 40 %igen Lösung von Methylamin in Wasser (käuflich erhältlich bei der Fa. Merck, Darmstadt) zugegeben und das ganze für eine Dauer von 3 Stunden bei 90°C unter Rückfluß erhitzt. Anschließend wird die so erhaltene Reaktionsmasse unter kräftigem Rühren und einem Druck von 500 hPa in 5 l Wasser gegeben, der entstandene Niederschlag abfiltriert und bei 80°C und 15 hPa getrocknet. Die Reaktionsmasse ist in der sauren Stufe wie auch in der basischen Stufe homogen. Es werden 700 g eines weißen, unschmelzbaren Organopolysiloxanharzpulvers mit einem Restethoxygehalt von 2,3 % und einem mittleren Teilchendurchmesser von 20,0 »m erhalten.

Das so erhaltene Organopolysiloxanharzpulver ist in gängigen organischen Lösungsmitteln, wie Toluol, Aceton, Hexan und Tetrahydrofuran bis zu 40 % löslich.

### Beispiel 9

450 g Tetraethoxysilan mit einem 40 %igen SiO₂-Anteil (käuflich erhältlich unter der Bezeichnung TES 40 bei der Wacker-Chemie GmbH, München), 166 g Hexamethyldisiloxan, 28 mg BHT (käuflich erhältlich bei der Fa. Fluka, Neu-Ulm) und 42 g 1,3-Bis-(n-5-hexenyl)tetramethyldisiloxan werden zu 100 g Wasser und 3,8 g 10 %iger HCl in Wasser gegeben, für eine Dauer von 3 Stunden unter Rückfluß erhitzt, wobei nach 30 Minuten eine klare Lösung entsteht. Anschließend werden während einer Dauer von einer Stunde 300 ml Destillat abgenommen. Dann wird eine Lösung von 3,4 g Methylamin 40 %ig in Wasser (käuflich erhältlich bei der Fa. Merck, Darmstadt) in 150 ml Tetrahydrofuran zugegeben und die klare Lösung für eine Dauer von 3 Stunden unter Rückfluß erhitzt. Anschließend wird die so erhaltene Reaktionsmasse in 2,5 l Wasser eingerührt. Nach 30 Minuten Rühren wird das ausgefallene Harz abfiltriert, mit Wasser gewaschen und bei 160°C bis zur Gewichtskonstanz getrocknet. Es werden 365 g eines weißen, nicht schmelzbaren Organopolysiloxanharzpulvers mit einem Restethoxygehalt von 2,5 % erhalten.

Das so erhaltene Organopolysiloxanharzpulver ist in gängigen organischen Lösungsmitteln, wie Toluol, Aceton, Hexan und Tetrahydrofuran, sowie in flüssigen Organopolysiloxanen, wie zum Beispiel α,ω-Trimethylsilylpolydimethylsiloxan mit einer Viskosität von 350 cSt, bis zu 60 % löslich.

Die Viskosität einer 50 %igen Lösung des erhaltenen Organopolysiloxanharzpulvers in Toluol beträgt 9 cSt.

### Vergleichsbeispiel 3

500 g Wasser und 50 g wäßriger Ammoniak (28 %) werden auf 10°C abgekühlt. Innerhalb von 40 Minuten wird eine Mischung aus 147 g Methyltrimethoxysilan und 54 g Phenyltrimethoxysilan zugetropft, wobei die Temperatur auf 33°C ansteigt. Die Mischung wird anschließend eine Stunde lang unter Rückfluß erhitzt, auf Raumtemperatur abgekühlt und das ausgefallene Pulver abfiltriert, mit Wasser nachgewaschen und bei 120°C bis zur Gewichtskonstanz getrocknet. Es entsteht ein weißes in allen gängigen organischen Lösungsmitteln unlösliches Pulver in 95 %iger Ausbeute.

## Patentansprüche

1. Verfahren zur Herstellung von Organopolysiloxanharz, dadurch gekennzeichnet, daß
in einer 1. Stufe
mindestens ein Silan der Formel
RₐSi(OR¹)₄₋ₐ (I),
wobei
a 0, 1, 2 oder 3 ist,
R gleich oder verschieden sein kann und einwertige, gegebenenfalls gegenüber Wasser inerte Substituenten aufweisende, Kohlenwasserstoffreste mit 1 bis 18 Kohlenstoffatomen bedeutet und
R¹ gleich oder verschieden sein kann und Alkylgruppen mit 1 bis 6 Kohlenstoffatomen, welche mit Alkoxyoder Hydroxygruppen substituiert sein können,
bedeutet,
und/oder dessen Teilhydrolysat, mit der Maßgabe, daß mindestens ein Silan der Formel (I) mit a gleich 0 oder 1 und/oder dessen Teilhydrolysat eingesetzt wird,
sowie gegebenenfalls Organo(poly)siloxan ausgewählt aus der Gruppe bestehend aus
R²₃Si-O-SiR²₃ (II),
wobei R² gleich oder verschieden sein kann und eine für R angegebene Bedeutung hat,
(R³₂SiO)_{b} (III),
wobei R³ gleich oder verschieden sein kann und eine für R angegebene Bedeutung hat und b eine ganze Zahl im Wert von 3 bis 8 ist, sowie deren Gemische in Wasser in Gegenwart von Säure und gegebenenfalls Polymerisationsinhibitor umgesetzt wird und
in einer 2. Stufe
die in der 1. Stufe erhaltene Reaktionsmasse in Anwesenheit von Base sowie gegebenenfalls weiteren Stoffen, ausgewählt aus der Gruppe bestehend aus polaren, wasserlöslichen organischen Lösungsmitteln und Silanen der Formel (I), in denen die Reste R ganz oder zum Teil die Bedeutung von säureempfindlichen organischen Resten haben, umgesetzt wird, wobei zur Reaktionsmasse der 1. Stufe Base in mindestens einer solchen Menge gegeben wird, die zur Neutralisation notwendig ist, sowie
in einer 3. Stufe
die in der 2. Stufe erhaltene Reaktionsmasse in Wasser gegebenenfalls im Gemisch mit Zusatzstoffen eingerührt wird, wobei die Menge an Wasser mindestens 500 Gewichtsprozent, bezogen auf das Gesamtgewicht der Reaktionsmasse der 2. Stufe, beträgt.

2. Verfahren nach Anspruch 1, dadurch gekennzeichnet, daß in der 1. Stufe ein Gemisch aus Organo(poly)siloxan der Formel (II) und Silan der Formel (I) mit a gleich 0 und/oder dessen Teilhydrolysat eingesetzt wird.

3. Verfahren nach Anspruch 1 oder 2, dadurch gekennzeichnet, daß in der 1. Stufe beliebige Gemische aus Silanen der Formel (I) und/oder deren Teilhydrolysate, mit der Maßgabe, daß mindestens ein Silan mit a gleich 0 oder 1 und/oder dessen Teilhydrolysat vorhanden ist, eingesetzt werden, in denen mindestens 20 Prozent der gesamten Anzahl der Reste R aromatische Reste sind.

4. Verfahren nach einem oder mehreren der Ansprüche 1 bis 3, dadurch gekennzeichnet, daß in der 1. Stufe als Säure HCl, p-Toluolsulfonsäure oder Dodecylbenzolsulfonsäure eingesetzt wird.

5. Verfahren nach einem oder mehreren der Ansprüche 1 bis 4, dadurch gekennzeichnet, daß die 2. Stufe bei einem pH-Wert zwischen 8,0 und 14,0 durchgeführt wird.

6. Verfahren nach einem oder mehreren der Ansprüche 1 bis 5, dadurch gekennzeichnet, daß in der 3. Stufe Wasser in Mengen von 500 bis 1000 Gewichtsprozent, bezogen auf das Gesamtgewicht der Reaktionsmasse der 2. Stufe, eingesetzt wird.

7. Verfahren nach einem oder mehreren der Ansprüche 1 bis 6, dadurch gekennzeichnet, daß Silan der Formel (I) mit a gleich 0 und/oder dessen Teilhydrolysat und
Organo(poly)siloxan der Formel (II)
in einer 1. Stufe mit Wasser und Säure vermischt und bei der Siedetemperatur der Reaktionsmasse und einem Druck zwischen 900 und 1100 hPa umgesetzt wird,
in einer 2. Stufe die in der 1. Stufe erhaltene Reaktionsmasse in Anwesenheit von Base und einem polaren, organischen Lösungsmittel mit einer Mindestlöslichkeit in Wasser von 300 g/l Wasser bei Raumtemperatur und dem Druck der umgebenden Atmosphäre bei der Siedetemperatur der Reaktionsmasse und einem Druck zwischen 900 und 1100 hPa umgesetzt wird und
in einer 3. Stufe die in der 2. Stufe erhaltene Reaktionsmasse bei Raumtemperatur und einem Druck zwischen 900 und 1100 hPa in Wasser eingerührt wird.

8. Verfahren nach Anspruch 1 zur Herstellung von SiC-gebundene n-5-Hexenylgruppen aufweisenden Organopolysiloxanharzen aus [R⁴₃SiO_{1/2}]- und [SiO_{4/2}]-Einheiten, wobei R⁴ gleich oder verschieden sein kann und eine für R angegebene Bedeutung hat, mit der Maßgabe, daß mindestens ein Rest R⁴ die Bedeutung von n-5-Hexenylrest hat, durch Umsetzung von Organo(poly)siloxan der Formel (II), wobei mindestens ein Rest R² die Bedeutung von n-5-Hexenylrest hat, und Silan der Formel (I) mit a gleich 0 und/oder dessen Teilhydrolysat.

9. Verfahren zur Herstellung von Organopolysiloxanharzpulver, dadurch gekennzeichnet, daß
in einer 1. Stufe
mindestens ein Silan der Formel
RₐSi(OR¹)₄₋ₐ (I),
wobei
a 0, 1, 2 oder 3 ist,
R gleich oder verschieden sein kann und einwertige, gegebenenfalls gegenüber Wasser inerte Substituenten aufweisende, Kohlenwasserstoffreste mit 1 bis 18 Kohlenstoffatomen bedeutet und
R¹ gleich oder verschieden sein kann und Alkylgruppen mit 1 bis 6 Kohlenstoffatomen, welche mit Alkoxyoder Hydroxygruppen substituiert sein können,
bedeutet,
und/oder dessen Teilhydrolysat, mit der Maßgabe, daß mindestens ein Silan der Formel (I) mit a gleich 0 oder 1 und/oder dessen Teilhydrolysat eingesetzt wird, sowie gegebenenfalls Organo(poly)siloxan ausgewählt aus der Gruppe bestehend aus
R²₃Si-O-SiR²₃ (II),
wobei R² gleich oder verschieden sein kann und eine für R angegebene Bedeutung hat,
(R³₂SiO)_{b} (III),
wobei R³ gleich oder verschieden sein kann und eine für R angegebene Bedeutung hat und b eine ganze Zahl im Wert von 3 bis 8 ist, sowie deren Gemische in Wasser in Gegenwart von Säure sowie gegebenenfalls Polymerisationsinhibitoren umgesetzt wird,
in einer 2. Stufe
die in der 1. Stufe erhaltene Reaktionsmasse in Anwesenheit von Base sowie gegebenenfalls weiteren Stoffen, ausgewählt aus der Gruppe bestehend aus polaren, wasserlöslichen organischen Lösungsmitteln und Silanen der Formel (I), in denen die Reste R ganz oder zum Teil die Bedeutung von säureempfindlichen organischen Resten haben, umgesetzt wird, wobei zur Reaktionsmasse der 1. Stufe Base in mindestens einer solchen Menge gegeben wird, die zur Neutralisation notwendig ist, und
in einer 3. Stufe
die in der 2. Stufe erhaltene Reaktionsmasse in Wasser gegebenenfalls im Gemisch mit Zusatzstoffen eingerührt wird, wobei die Menge an Wasser mindestens 500 Gewichtsprozent, bezogen auf das Gesamtgewicht der Reaktionsmasse der 2. Stufe, beträgt, sowie
in einer 4. Stufe
das in der 3. Stufe erhaltene, ausgefallene Organopolysiloxanharz abfiltriert, gegebenenfalls mit Wasser gewaschen und getrocknet wird.

## Claims

1. Process for the preparation of organopolysiloxane resin, characterized in that in a 1st stage at least one silane of the formula
RₐSi(OR¹)₄₋ₐ (I)
in which
a is 0, 1, 2 or 3,
R can be identical or different and is a monovalent hydrocarbon radical which may contain substituents inert towards water and which has from 1 to 18 carbon atoms, and
R¹ can be identical or different and is an alkyl group having from 1 to 6 carbon atoms, which may be substituted by alkoxy or hydroxy groups,
and/or a partial hydrolysate thereof, with the proviso that at least one silane of formula (I) in which a is equal to 0 or 1, and/or a partial hydrolysate thereof, is used, and, if appropriate, an organo(poly)siloxane selected from the group consisting of
R²₃Si-O-SiR²₃ (II)
in which R² can be identical or different and is as defined for R,
(R³₂SiO)_{b} (III)
in which R³ can be identical or different and is as defined for R, and b is an integer with a value of 3 to 8, and mixtures thereof, are reacted in water in the presence of acid and, if appropriate, polymerization inhibitor, in a 2nd stage the reaction mixture obtained in the ist stage is reacted in the presence of base and, if appropriate, other substances selected from the group consisting of polar, water-soluble organic solvents and silanes of the formula (I), in which the radicals R are all or in part acid-sensitive organic radicals, base being added to the reaction mixture from the ist stage in at least the amount required for neutralization, and in a 3rd stage the reaction mixture obtained in the 2nd stage is stirred into water, if appropriate mixed with additives, the amount of water being at least 500 percent by weight, based on the total weight of the reaction mixture from the 2nd stage.

2. Process according to Claim 1, characterized in that a mixture of an organo(poly)siloxane of formula (II) and a silane of formula (I) in which a is equal to 0, and/or a partial hydrolysate thereof, is used in the 1st stage.

3. Process according to Claim 1 or 2, characterized in that any desired mixtures of silanes of formula (I), and/or partial hydrolysates thereof, with the proviso that at least one silane in which a is equal to 0 or 1, and/or a partial hydrolysate thereof, is present, are used in the 1st stage, at least 20 percent of the total number of radicals R in said mixtures being aromatic radicals.

4. Process according to one or more of Claims 1 to 3, characterized in that HCl, p-toluenesulfonic acid or dodecylbenzenesulfonic acid is used as the acid in the 1st stage.

5. Process according to one or more of Claims 1 to 4, characterized in that the 2nd stage is carried out at a pH of between 8.0 and 14.0.

6. Process according to one or more of Claims 1 to 5, characterized in that water is used in the 3rd stage in amounts of 500 to 1000 percent by weight, based on the total weight of the reaction mixture of the 2nd stage.

7. Process according to one or more of Claims 1 to 6, characterized in that in a 1st stage a silane of formula (I) in which a is equal to 0, and/or a partial hydrolysate thereof, and an organo(poly)siloxane of formula (II) are mixed with water and acid and reacted at the boiling point of the reaction mixture and at a pressure of between 900 and 1100 hPa, in a 2nd stage the reaction mixture obtained in the 1st stage is reacted in the presence of base and a polar, organic solvent with a minimum solubility in water of 300 g/l of water at room temperature and the pressure of the surrounding atmosphere at the boiling point of the reaction mixture and at a pressure of between 900 and 1100 hPa, and in a 3rd stage the reaction mixture obtained in the 2nd stage is stirred into water at room temperature and at a pressure of between 900 and 1100 hPa.

8. Process according to Claim 1 for the preparation of organopolysiloxane resins made up of [R⁴₃SiO_{1/2}] and [SiO_{4/2}] units and containing SiC-bonded n-5-hexenyl groups, R⁴, which can be identical or different, being as defined for R, with the proviso that at least one radical R⁴ is the n-5-hexenyl radical, by reaction of an organo-polysiloxane of the formula (II), at least one radical R² being the n-5-hexenyl radical, and a silane of the formula (I) having a equal to 0 and/or a partial hydrolysate thereof.

9. Process for the preparation of organopolysiloxane resin powder, characterized in that in a 1st stage at least one silane of the formula
RₐSi(OR¹)₄₋ₐ (I)
in which
a is 0, 1, 2 or 3,
R can be identical or different and is a monovalent hydrocarbon radical which may contain substituents inert towards water and which has from 1 to 18 carbon atoms, and
R¹ can be identical or different and is an alkyl group having from 1 to 6 carbon atoms, which may be substituted by alkoxy or hydroxy groups,
and/or a partial hydrolysate thereof, with the proviso that at least one silane of formula (I) in which a is equal to 0 or 1, and/or a partial hydrolysate thereof, is used, and, if appropriate, an organo(poly)siloxane selected from the group consisting of
R²₃Si-O-SiR²₃ **(**II)
in which R² can be identical or different and is as defined for R,
(R³₂SiO)_{b} **(**III)
in which R³ can be identical or different and is as defined for R, and b is an integer with a value of 3 to 8, and mixtures thereof, are reacted in water in the presence of acid and, if appropriate, polymerization inhibitor, in a 2nd stage the reaction mixture obtained in the 1st stage is reacted in the presence of base and, if appropriate, other substances selected from the group consisting of polar, water-soluble organic solvents and silanes of the formula (I), in which the radicals R are all or in part acid-sensitive organic radicals, base being added to the reaction mixture from the 1st stage in at least the amount required for neutralization, in a 3rd stage the reaction mixture obtained in the 2nd stage is stirred into water, if appropriate mixed with additives, the amount of water being at least 500 percent by weight, based on the total weight of the reaction mixture from the 2nd stage, and in a 4th stage the precipitated organopolysiloxane resin obtained in the 3rd stage is filtered off, washed with water if necessary and dried.

## Revendications

1. Procédé pour préparer une résine de polyorgano-siloxane, caractérisé en ce que
dans une première étape,
on fait réagir un silane de formule
RₐSi(OR¹)₄₋ₐ (I)
dans laquelle
a vaut 0, 1, 2 ou 3,
les radicaux R peuvent être identiques ou différents et représentent chacun un radical hydrocarboné ayant de 1 à 18 atomes de carbone, monovalent, comportant éventuellement des substituants inertes vis-à-vis de l'eau, et
les radicaux R¹ peuvent être identiques ou différents et représentent chacun des groupes alkyle ayant de 1 à 6 atomes de carbone, qui peuvent être substitués par des groupes alcoxy ou hydroxy,
et/ou son hydrolysat partiel, du moment qu'on utilise au moins un silane de formule (I) dans laquelle a vaut 0 ou 1 et/ou son hydrolysat partiel,
et éventuellement un (poly)organosiloxane choisi parmi l'ensemble comprenant les composés suivants :
R²₃Si-O-SiR²₃ (II)
où les radicaux R² peuvent être identiques ou différents et ont chacun l'une des significations données pour R,
(R³₂SiO)_{b} (III)
où les radicaux R³ peuvent être identiques ou différents et ont chacun l'une des significations données pour R, et b est un nombre entier valant de 3 à 8, de préférence 4 ou 5, ainsi que leurs mélanges, cette réaction ayant lieu dans l'eau en présence d'un acide et éventuellement d'un inhibiteur de polymérisation ; et
dans une deuxième étape,
on fait réagir la masse réactionnelle obtenue dans la première étape, en présence d'une base et éventuellement d'autres substances choisies parmi l'ensemble comprenant les solvants organiques polaires solubles dans l'eau et les silanes de formule (I), où les radicaux R, en totalité ou en partie, représentent des radicaux organiques sensibles aux acides, auquel cas on ajoute à la masse réactionnelle de la première étape une base au moins en la quantité nécessaire à la neutralisation ; et
dans une troisième étape,
on délaye la masse réactionnelle obtenue dans la deuxième étape dans de l'eau, éventuellement en mélange avec des additifs, la quantité d'eau étant d'au moins 500 % en poids par rapport au poids total de la masse réactionnelle de la deuxième étape.

2. Procédé selon la revendication 1, caractérisé en ce qu'on utilise dans la première étape un mélange d'un (poly)organosiloxane de formule (II) et d'un silane de formule (I), où a vaut 0, et/ou son hydrolysat partiel.

3. Procédé selon la revendication 1 ou 2, caractérisé en ce qu'on utilise dans la première étape des mélanges quelconques de silanes de formule (I) et/ou de leurs hydrolysats partiels, du moment qu'est présent au moins un silane dans lequel a vaut 0 ou 1 et/ou son hydrolysat partiel, au moins 20 % du nombre total des radicaux R étant des radicaux aromatiques.

4. Procédé selon l'une ou plusieurs des revendications 1 à 3, caractérisé en ce qu'on utilise dans la première étape, en tant qu'acide, du HCl, de l'acide p-toluènesulfonique ou de l'acide dodécylbenzènesulfonique.

5. Procédé selon l'une ou plusieurs des revendications 1 à 4, caractérisé en ce que la deuxième étape est mise en oeuvre à un pH de 8,0 à 14,0.

6. Procédé selon l'une ou plusieurs des revendications 1 à 5, caractérisé en ce qu'on utilise dans la troisième étape de l'eau en des quantités de 500 à 1000% en poids par rapport au poids total de la masse réactionnelle de la deuxième étape.

7. Procédé selon l'une ou plusieurs des revendications 1 à 6, caractérisé en ce qu'on mélange un silane de formule (I) dans lequel a vaut 0, notamment le tétraéthoxysilane, et/ou son hydrolysat partiel, et un (poly)organosiloxane de formule (II) dans une première étape avec de l'eau et un acide, et on les fait réagir à la température d'ébullition de la masse réactionnelle, et sous une pression de 900 à 1100 hPa ;
dans une deuxième étape, on fait réagir la masse réactionnelle obtenue dans la première étape, en présence d'une base et d'un solvant organique polaire ayant dans l'eau une solubilité minimale de 300 g/l d'eau à la température ambiante et sous la pression de l'atmosphère ambiante, notamment le tétrahydrofuranne, à la température d'ébullition de la masse réactionnelle, et sous une pression de 900 à 1100 hPa, et
dans une troisième étape, on délaye dans l'eau la masse réactionnelle obtenue dans la deuxième étape, à la température ambiante et sous une pression de 900 à 1100 hPa.

8. Procédé selon la revendication 1, pour préparer des résines de polyorganosiloxane comportant des groupes n-5-hexényle liés par une liaison SiC, constituées de motifs [R⁴₃SiO_{1/2}] et [SiO_{4/2}], les radicaux R⁴ pouvant être identiques ou différents et ayant chacun l'une des significations données pour R, du moment qu'au moins un radical R⁴ représente un radical n-5-hexényle, par réaction d'un (poly)organosiloxane de formule (II), au moins un radical R² représentant le radical n-5-hexényle, et d'un silane de formule (I) dans laquelle a vaut 0 et/ou son hydrolysat partiel.

9. Procédé pour préparer des poudres de résine de polyorganosiloxane, caractérisé en ce que
dans une première étape,
on fait réagir au moins un silane de formule
RₐSi(OR¹)₄₋ₐ (I)
dans laquelle
a vaut 0, 1, 2 ou 3,
les radicaux R peuvent être identiques ou différents et représentent chacun un radical hydrocarboné ayant de 1 à 18 atomes de carbone, monovalent et comportant éventuellement des substituants inertes vis-à-vis de l'eau, et
les radicaux R¹ peuvent être identiques ou différents et représentent chacun un groupe alkyle ayant de 1 à 6 atomes de carbone, pouvant être substitué par des groupes alcoxy ou hydroxy,
et/ou son hydrolysat partiel, du moment qu'on utilise au moins un silane de formule (I) dans laquelle a vaut 0 ou 1 et/ou son hydrolysat partiel,
et éventuellement un (poly)organosiloxane choisi parmi l'ensemble comprenant
R²₃Si-O-SiR²₃ (II)
où les radicaux R² peuvent être identiques ou différents et ont chacun l'une des significations données pour R,
(R³₂SiO)_{b} (III)
où les radicaux R³ peuvent être identiques ou différents et ont chacun l'une des significations données pour R, et b est un nombre entier de 3 à 8, ainsi que leurs mélanges dans l'eau en présence d'un acide et éventuellement d'inhibiteurs de polymérisation,
dans une deuxième étape,
on fait réagir la masse réactionnelle obtenue dans la première étape, en présence d'une base et éventuellement d'autres substances choisies parmi l'ensemble comprenant les solvants organiques polaires solubles dans l'eau et les silanes de formule (I), où les radicaux R, en totalité ou en partie, représentent des radicaux organiques sensibles aux acides, auquel cas on ajoute à la masse réactionnelle de la première étape une base au moins en la quantité nécessaire à la neutralisation ; et
dans une troisième étape,
on délaye la masse réactionnelle obtenue dans la deuxième étape dans de l'eau, éventuellement en mélange avec des additifs, la quantité d'eau étant d'au moins 500 % en poids par rapport au poids total de la masse réactionnelle de la deuxième étape, et
dans une quatrième étape,
on isole par filtration la résine de polyorganosiloxane précipitée obtenue dans la troisième étape, on la lave éventuellement à l'eau et on la sèche.
